# EUROPÄISCHE PATENTSCHRIFT

(11) **EP 3 362 714 B1**
(45) Veröffentlichungstag und Bekanntmachung des Hinweises auf die Patenterteilung: **14.08.2019**
(21) Anmeldenummer: 16791324.3
(22) Anmeldetag: 12.10.2016
(51) Int. Cl.: F16K 15/06, F04B 39/10

(54) **POPPETVENTIL**
POPPET VALVE
SOUPAPE-CHAMPIGNON

(30) Priorität: 12.10.2015 EP 15189427
(43) Veröffentlichungstag der Anmeldung: 22.08.2018
(73) Patentinhaber: Burckhardt Compression AG, 8404 Winterthur (CH)
(72) Erfinder: SCHULZ, Reiner, 79807 Lottstetten (DE)
(74) Vertreter: Dr. Graf & Partner AG
(86) Internationale Anmeldenummer: PCT/EP2016/074524
(87) Internationale Veröffentlichungsnummer: WO 2017/064154

(56) Entgegenhaltungen:
- EP-A1- 2 703 647
- DE-A1- 2 211 415
- DE-A1-102008 029 822
- US-A- 1 516 846

## Beschreibung

Die Erfindung betrifft ein Poppetventil für einen Kolbenkompressor sowie einen Kolbenkompressor mit einem derartigen Poppetventil.

### Stand der Technik

Die Druckschriften US2010/0090149A1 und EP2703647A1 offenbaren je ein Poppetventil für einen Kompressor. Diese Poppetventile weisen einen relativ hohen Verschleiss auf. Zudem weist dieses Poppetventil einen relativ hohen Druckverlust auf. Die Druckschrift US4489752 offenbart ein weiteres Poppetventil für einen Kompressor. Auch dieses Poppetventil weist einen relativ hohen Verschleiss und einen immer noch relativ hohen Druckverlust auf.

### Darstellung der Erfindung

Aufgabe der Erfindung ist es ein Poppetventil für einen Kolbenkompressor auszugestalten, das vorteilhaftere Betriebseigenschaften aufweist.

Diese Aufgabe wird gelöst mit einem Poppetventil aufweisend die Merkmale von Anspruch 1. Die Unteransprüche 2 bis 18 betreffen weitere, vorteilhafte Ausgestaltungen der Erfindung.

Die Aufgabe wird insbesondere gelöst mit einem Poppetventil für einen Kolbenkompressor, umfassend einen Fänger, einen Ventilkörper mit einer Mehrzahl von Einlasskanälen, wobei jeder Einlasskanal in einen Ventilsitz mündet, sowie umfassend eine Mehrzahl von in einer axialen Richtung beweglichen Schliesselementen, wobei jedem Einlasskanal ein Schliesselement zugeordnet ist, und wobei der Ventilsitz in axialer Richtung gegenüber liegend dem zugeordneten Schliesselement angeordnet ist, derart, dass der Ventilsitz durch das Schliesselement verschliessbar ist, wobei zwischen dem Fänger und dem Schliesselement eine Feder angeordnet ist, um auf das Schliesselement eine zum Ventilsitz hin ausgerichtete Vorspannkraft zu bewirken, wobei die Feder einen Innenraum umschliesst, und wobei am Fänger ein in axialer Richtung verlaufendes Führungsteil angeordnet ist, welches sich bis zu einem Führungsteilende erstreckt, wobei das Schliesselement am Führungsteil in axialer Richtung beweglich, insbesondere gleitend gelagert ist, wobei die Feder das Führungsteil sowie das Schliesselement in axialer Richtung entlang eines Teilabschnittes von aussen umschliesst, sodass sowohl das Führungsteil als auch das Schliesselement entlang dieses Teilabschnittes innerhalb des Innenraumes der Feder angeordnet sind, und wobei das vom Fänger ausgehende Führungsteil sich anschliessed an den Teilabschnitt weiter in axialer Richtung bis zum Führungsteilende erstreckt.

Der Ventilkörper kann je nach Erfordernis unterschiedliche Bauformen aufweisen, und beispielsweise als Ventilsitzdeckel, als hohlzylinderförmiger Körper oder als Zylinder ausgestaltet sein.

Beim erfindungsgemässen Poppetventil ist das Schliesselement in der bevorzugten Ausgestaltung an einem zumindest teilweise im Innern des Schliesselements verlaufenden Führungsteil in einer axialen Richtung beweglich, vorzugsweise linear beweglich, und vorzugsweise gleitend gelagert. Das Schliesselement kann, abhängig von der Ausführungsform, durch eine Innenführung oder ein Aussenführung in linearer beziehungsweise in axialer Richtung geführt sein, Zudem ist sowohl das Führungsteil als auch das Schliesselement in axialer Richtung entlang eines Teilabschnittes innerhalb des Innenraumes der Feder angeordnet. Das erfindungsgemässe Poppetventil weist den Vorteil auf, dass die Haltestruktur eines Fängers, welcher das Führungsteil hält, sehr klein ausgestaltet sein kann, insbesondere wenn das Schliesselement innengeführt ist, und wenn die Feder zum Fänger hin einen sich verjüngenden Aussenquerschnitt aufweist. Zudem ist es möglich, den Zwischenraum zwischen den Führungsteilen relativ gross auszugestalten. Dies ermöglicht es, den Fänger mit grossen Zwischenräumen zu versehen, insbesondere mit grösseren, bauteilfreien Zwischenräumen, was den Vorteil ergibt, dass das durchströmende Fluid einen geringen Strömungswiderstand aufweist und dass das erfindungsgemässe Poppetventil einen geringen Druckabfall aufweist. Beim erfindungsgemässen Poppetventil ist die auf das Schliesselement wirkende Feder derart angeordnet, dass die Feder das Führungsteil sowie das Schliesselement in axialer Richtung entlang eines Teilabschnittes von aussen umschliesst, sodass sowohl das Führungsteil als auch das Schliesselement entlang dieses Teilabschnittes innerhalb des Innenraumes der Feder angeordnet ist. Das erfindungsgemässe Poppetventil weist den Vorteil auf, dass dieses in einer vorteilhaften Ausgestaltung, im Vergleich zu aus dem Stand der Technik bekannten Poppetventilen, eine Feder mit grösserem Durchmesser aufweist. Ein grösserer Durchmesser hat zur Folge, dass in der Feder geringere Spannungen auftreten, was den Verschleiss reduziert und die Lebensdauer der Feder erhöht. In einer besonders vorteilhaften Ausgestaltung weist die Feder einen derart grossen Aussendurchmesser auf, dass die Feder nur an einer Auflage des Schliesselements am Schliesselement aufliegt, ansonsten jedoch keine Berührung mit dem Schliesselement aufweist. Dadurch wird der Verschleiss von Feder und Schliesselement zusätzlich reduziert. Durch die aussenliegende Feder, die eine Umströmung der Windungen zulässt, wird der Bauraum im Vergleich zu einem konventionellen Poppetventil, bei dem dieser Raum der Strömung gar nicht zur Verfügung steht, besser ausgenutzt, d.h. der Strömungsquerschnitt im Bereich des Fängers wird erheblich vergrössert. Dies führt zu niedrigeren Druckverlusten. Bei einer besonders vorteilhaften Gestaltung kann zusätzlich auch die Feder selbst in Proportionen, Windungszahl, Drahtquerschnitt usw. strömungsgünstig gestaltet werden. Die auf das Schliesselement wirkende Feder, welche das Führungsteil sowie das Schliesselement in axialer Richtung entlang eines Teilabschnittes von aussen umschliesst, weist somit vorteilhafterweise einen geringen Strömungswiderstand auf, sodass ein durchströmendes Fluid einen geringen Druckverlust erfährt. Das erfindungsgemässe Poppetventil weist somit in einer bevorzugten Ausgestaltung sowohl einen geringen Druckverlust als auch einen geringen Verschleiss auf, was einen kostengünstigen und zuverlässigen Betrieb ermöglicht. Das erfindungsgemässe Poppetventil weist den weiteren Vorteil auf, dass die Schliesselemente und Federn einfach und kostengünstig ersetzt werden können.

Als Federn sind Druckfedern geeignet, welche in einer Längsrichtung verlaufen, und welche einen Innenraum aufweisen, in welchem das Führungsteil und das Schliesselement zumindest teilweise angeordnet werden können. Besonders geeignet ist eine in Längsrichtung verlaufende Spiralfeder bzw. Schraubenfeder mit einem in Längsrichtung verlaufenden Innenraum. In einer besonders vorteilhaften Ausgestaltung weist die Feder in axialer Richtung einen zunehmenden Durchmesser auf, wobei die Feder besonders bevorzugt konusförmig bzw. kegelförmig ausgestaltet ist. Diese konus- bzw. kegelförmige Ausgestaltung, in der Draufsicht spiralförmig, weist in einer besonders vorteilhaften Ausgestaltung den Vorteil auf, dass sich die einzelnen Windungen der Feder, insbesondere auch bei grossem Federweg, gegenseitig nicht oder nur geringfügig berühren, was den Verschleiss der Feder zusätzlich reduziert. Zudem erfordert eine derartige Feder eine geringere Bauhöhe des Poppetventils, was unter anderem den Vorteil ergibt, dass der Schadraum im Kompressor kleiner wird.
Die Feder kann in einer Vielzahl von Möglichkeiten ausgestaltet sein, beispielsweise auch als eine Mehrzahl von in Längsrichtung nacheinander angeordneten Tellerfedern mit einem Innenraum, oder eine hohlzylinderförmige Gummifeder.

In einer besonders vorteilhaften Ausgestaltung weist das erfindungsgemässe Poppetventil ein Schliesselement auf mit einer zum Ventilsitz hin zugewandte Stirnseite, wobei sich die Stirnseite in axialer Richtung zum Fänger hin bis zu einem maximalen Umfang erweitert, wobei der maximale Umfang einen Umfangsmittelpunkt aufweist, und wobei der Umfangsmittelpunkt zumindest bei vollständig geöffnetem Schliesselement innerhalb des Verlaufs des Führungsteils zu liegen kommt. Dies ergibt eine besonders vorteilhafte Linearführung des Schliesselementes und reduziert den Verschleiss des Schliesselementes, insbesondere wenn Kräfte und Drehmomente am Schliesselement angreifen. In einer weiteren, vorteilhaften Ausgestaltung ist der Umfangsmittelpunkt auch bei geschlossenem Schliesselement innerhalb des Verlaufs des Führungsteils liegend angeordnet.

In einer vorteilhaften Ausführungsform könnte der Kolbenkompressor als Membrankompressor ausgestaltet sein.

Die Erfindung wird nachfolgend an Hand von Ausführungsbeispielen im Detail beschrieben.

### Kurze Beschreibung der Zeichnungen

Die zur Erläuterung der Ausführungsbeispiele verwendeten Zeichnungen zeigen:
- Fig. 1: eine Stirnansicht eines geschlossenen Poppetventils;
- Fig. 2: einen perspektivischen Längsschnitt durch das Poppetventil gemäss Fig. 1 entlang der Schnittlinie B-B, wobei die Schliesselemente geöffnet sind;
- Fig. 3: eine Unteransicht des Poppetventils gemäss Fig. 1 und 2;
- Fig. 4: eine Detailansicht des Fängers gemäss Fig. 2 und 3;
- Fig. 5: einen perspektivischen Längsschnitt durch ein einzelnes Ventilelement eines Poppetventils gemäss Figur 2;
- Fig. 6: eine Draufsicht auf den Schnitt gemäss Fig. 5;
- Fig. 7: einen perspektivischen Längsschnitt eines zweiten Ausführungsbeispiels eines Ventilelements eines Poppetventils;
- Fig. 8: einen perspektivischen Längsschnitt eines dritten Ausführungsbeispiels eines Ventilelements eines Poppetventils;
- Fig. 9: einen perspektivischen Längsschnitt eines vierten Ausführungsbeispiels eines Ventilelements eines Poppetventils;
- Fig. 10: einen perspektivischen Längsschnitt eines fünften Ausführungsbeispiels eines Ventilelements eines Poppetventils;
- Fig. 11: einen perspektivischen Längsschnitt eines sechsten Ausführungsbeispiels eines Ventilelements eines Poppetventils;
- Fig. 12: ein weiteres Ausführungsbeispiel einer Druckfeder;
- Fig. 13: ein weiteres Ausführungsbeispiel einer Druckfeder;
- Fig. 14: einen Längsschnitt durch ein siebtes Ausführungsbeispiel eines einzelnen Ventilelementes eines Poppetventils;
- Fig. 15 -18: je einen perspektivischen Längsschnitt von weiteren Ausführungsbeispielen von Schliesselementen;
- Fig. 19: einen perspektivischen Längsschnitt eines Führungsteils sowie eines Schliesselements;
- Fig. 20: einen perspektivischen Längsschnitt eines Führungsteils;
- Fig. 21: einen Längsschnitt durch ein weiteres Ventilelement eines Poppetventils;
- Fig. 22: ein Poppetventil aufweisend einen zylinderförmigen Ventilkörper mit einer Mehrzahl von Ventilen;
- Fig. 23: ein Poppetventil aufweisend einen Ventilkörper mit einer Mehrzahl darin angeordneter Ventile.

Grundsätzlich sind in den Zeichnungen gleiche Teile mit gleichen Bezugszeichen versehen.

### Wege zur Ausführung der Erfindung

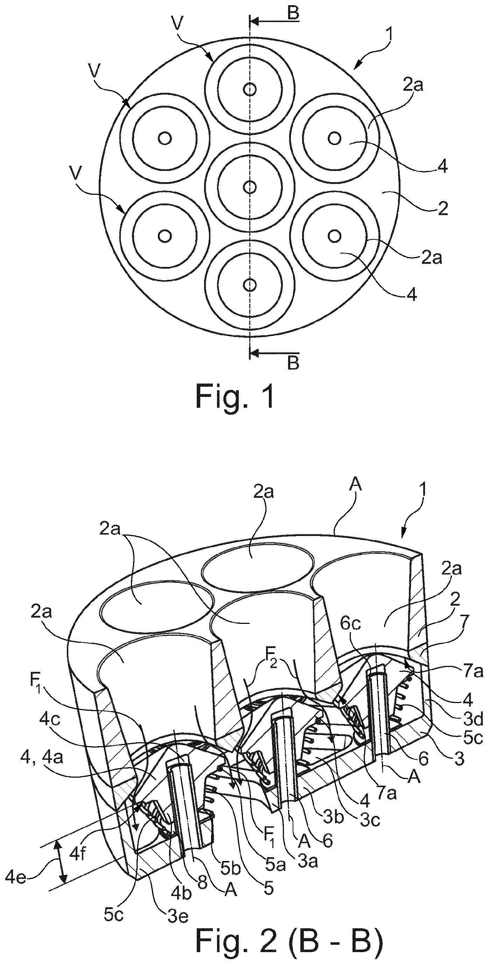

Fig. 1 zeigt eine Stirnansicht eines Poppetventils 1 mit sieben Schliessventilen V, wobei jedes Schliessventil V ein Schliesselement 4 umfasst, und wobei die Schliesselemente 4 in Fig. 1 in geschlossenem Zustand sind. Das Poppetventil 1 umfasst einen als Ventilsitzdeckel ausgestalteten Ventilkörper 2 mit einer Mehrzahl von Einlasskanälen 2a. Jeder Einlasskanal 2a mündet in einen Ventilsitz 7a, wobei der Ventilsitz 7a durch je ein Schliesselement 4 verschlossen ist. Figur 2 zeigt einen Schnitt entlang der Schnittlinie B-B durch das Poppetventil 1 gemäss Figur 1, wobei die Schliesselemente 4 in Figur 2 jedoch in geöffnetem Zustand dargestellt sind. Das Poppetventil 1 umfasst zumindest den Ventilsitzdeckel 2 mit Einlasskanälen 2a, einen Fänger 3, in axialer Richtung A verlaufende Führungsteile 6, welche am Fänger 3 befestigt sind, sowie eine Mehrzahl von in axialer Richtung A an je einem Führungsteil 6 beweglich gelagerte, vorzugsweise gleitend gelagerte Schliesselemente 4. Jedes der Schliesselemente 4 ist je einem Ventilsitz 7a zugeordnet, wobei die Schliesselemente 4 in axialer Richtung A jeweils gegenüber liegend dem zugeordneten Ventilsitz 7a angeordnet sind, und wobei die Schliesselemente 4 derart in axialer Richtung A verschiebbar sind, dass der Ventilsitz 7a und damit der Eingangskanal 2a geöffnet bzw. geschlossen werden kann. Das Poppetventil 1 umfasst zudem Federn 5 um auf die Schliesselemente 4 eine zum Ventilsitz 7a bzw. zum Ventilsitzdeckel 2 hin ausgerichtete Vorspannkraft zu bewirken. Die Schliesselemente 4 werden auch als Poppet oder Ventilkegel bezeichnet. Der Fänger 3 umfasst eine Haltestruktur 3e, welche vorzugsweise senkrecht zur axialen Richtung A verläuft, wobei an der Haltestruktur 3e in axialer Richtung A verlaufende Führungsteile 6 angeordnet sind, an welchen die Schliesselemente 4 in axialer Richtung A beweglich beziehungsweise linear beweglich angeordnet sind, und vorzugsweise gleitend gelagert sind. Die Führungsteile 6 sind im dargestellten Ausführungsbeispiel hohlzylinderförmig ausgestaltet. Die Schliesselemente 4 umfassen im dargestellten Ausführungsbeispiel einen Schliesskopf 4a sowie einen Führungsabschnitt 4b, wobei das Schliesselement 4 konzentrisch ausgestaltet ist und entlang der Symmetrieachse eine Bohrung 4c aufweist, welche mit dem Führungsteil 6 ein Gleitlager ausbildet, sodass das Führungsteil 6 bezüglich dem Schliesselement 4 eine Innenführung ausbildet. Der Schliesskopf 4a umfasst zudem eine Auflage 4f, welche vorteilhafterweise flächig ausgestaltet ist. Die Feder 5 umfasst ein erstes Federende 5a sowie ein zweites Federende 5b, wobei das erste Federende 5a an der Auflage 4f anliegt, und wobei das zweite Federende 5b direkt am Fänger 3 oder an einer dazwischen angeordneten Federauflage 8 anliegt, um eine zum Ventilsitz 7a hin wirkende Vorspannkraft auf das Schliesselement 4 zu bewirken. Die Feder 5 weist einen Innenraum 5c auf. Die Feder 5 umschliesst das Führungsteil 6 sowie das Schliesselement 4 in axialer Richtung A entlang eines Teilabschnittes 4e von aussen, sodass sowohl das Führungsteil 6 als auch das Schliesselement 4 entlang dieses Teilabschnittes 4e innerhalb des Innenraumes 5c der Feder 5 angeordnet sind. Die Feder 5 weist in axialer Richtung A zum Ventilsitz 7a hin einen zunehmenden Durchmesser auf, wobei sich die Feder 5 in einer bevorzugten Ausführungsform konusförmig erweitert. Vorteilhafterweise ist die Feder 5 derart ausgestaltet, dass die Feder 5 das Schliesselement 4 nur an der Auflage 4f berührt. Die sich erweiternde Feder 5 weist den Vorteil auf, dass das zweite Federende 5b eine geringeren Durchmesser beziehungsweise eine geringere Auflagefläche aufweist als das erste Federende 5a, was zur Folge hat, dass sich im Bereich des Fängers 3 ein grösserer bauteilfreier Zwischenraum ergibt, der vom Fluid F durchströmbar ist. In Figur 2 sind die Fluidströme F1, F2 von zwei nebeneinander liegend angeordneten Ventilen V beispielhaft dargestellt. Die Fluidströme F1, F2 werden durch die Stirnseite 4p des Schliesselementes 4 quer zur axialen Richtung A abgelenkt, sodass die Fluidströme F1, F2 beispielsweise wie dargestellt dem Fänger 3 zuströmen. Die sich überkreuzenden Fluidströme F1, F2 umströmen insbesondere Teile des benachbarten Schliesselementes 4 beziehungsweise dessen Feder 5. Um diese Fluidströme F1, F2 nach Möglichkeit nicht zu behindern ist der bauteilfreie Zwischenraum, insbesondere der sich zum Fänger 3 hin erweiternde bauteilfreie Zwischenraum vorteilhaft. Besonders vorteilhaft sind die sich zum Fänger 3 hin verjüngenden Schliesselemente 4. Besonders vorteilhaft ist zudem die Anordnung der Federn 5, weil diese die Fluidströmung F1, F2 nur geringfügig, vorzugsweise vernachlässigbar geringfügig beeinflussen.

Das Poppetventil 1 umfasst eine Mehrzahl von Einlasskanälen 2a mit Ventilsitzen 7a, und jeweils dazu zugeordneten Schliesselementen 4 mit Federn 5, sodass das Poppetventil 1 ein vielsitziges Poppetventil, beziehungsweise ein Poppetventil 1 mit einer Mehrzahl von Schliessventilen V ausbildet.

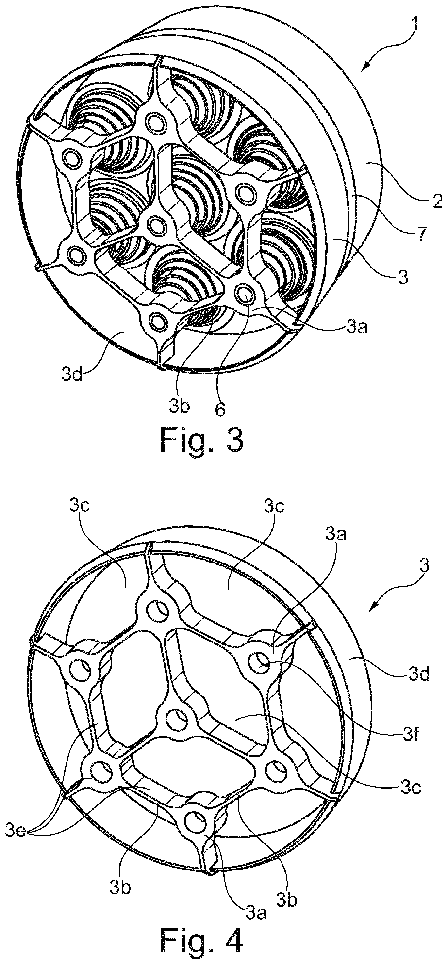

In einer besonders vorteilhaften Ausgestaltung umfasst das Poppetventil 1, wie in den Figuren 2 und 3 dargestellt, eine Sitzplatte 7, welche derart angeordnet ist, dass der Schliesskopf 4a daran anschlägt und dadurch den Einlasskanal 2a verschliesst, sodass der Ventilsitz 7a in der Sitzplatte 7 beziehungsweise durch ein Teil der Sitzplatte 7 ausgebildet ist. Die Sitzplatte 7 ist auf Grund des Ventilsitzes 7a bzw. des einwirkenden Schliesskopfs 4a ein Verschleissteil und kann vorteilhafterweise auf einfache Weise ausgetauscht werden. In einer weiteren möglichen Ausgestaltung kann auf die Sitzplatte 7 verzichtet werden, sodass der Schliesskopf 4a direkt an den Ventilsitzdeckel 2 anschlägt und der Ventilsitz 7a Teil des Ventilsitzdeckels 2 ist.

Figur 3 zeigt das in den Figuren 1 und 2 dargestellte Poppetventil 1 in einer Unteransicht. Figur 4 zeigt den in den Figuren 2 und 3 dargestellten Fänger 3 im Detail. Der Fänger 3 weist vorteilhafterweise eine eben beziehungsweise flach verlaufende Haltestruktur 3e auf, wobei die Haltestruktur 3e wie in den Figuren 2 bis 4 dargestellt, vorzugsweise als eine Gitterstruktur ausgestaltet ist, umfassend eine Vielzahl von Streben 3b und Knoten 3a, wobei die Führungsteile 6 an den Knoten 3a angeordnet und vorteilhaferweise austauschbar befestigt sind. Vorteilhafterweise weist jeder Knoten 3a eine Bohrung 3f auf, in welcher das Führungsteil 6 befestigt ist. Die dargestellte Haltestruktur 3e weist vorzugsweise grosse Zwischenräume 3c auf, was den Vorteil ergibt, dass das über die Einlasskanäle 2a einströmende Fluid ungehindert oder im Wesentlichen ungehindert durch den Fänger 3 strömen kann, sodass ein nur sehr geringer Druckverlust entsteht. In einer vorteilhaften Ausgestaltung umfasst der Fänger 3, wie in Fig. 3 und 4 dargestellt, eine hohlzylinderförmige Aussenwand 3d, welche in axialer Richtung A verläuft und welche die Haltestruktur 3e in Umfangsrichtung umschliesst. Der Fänger 3 wirkt somit auch als Ventilschutzanordnung, in Englisch als "valve guard" bezeichnet.

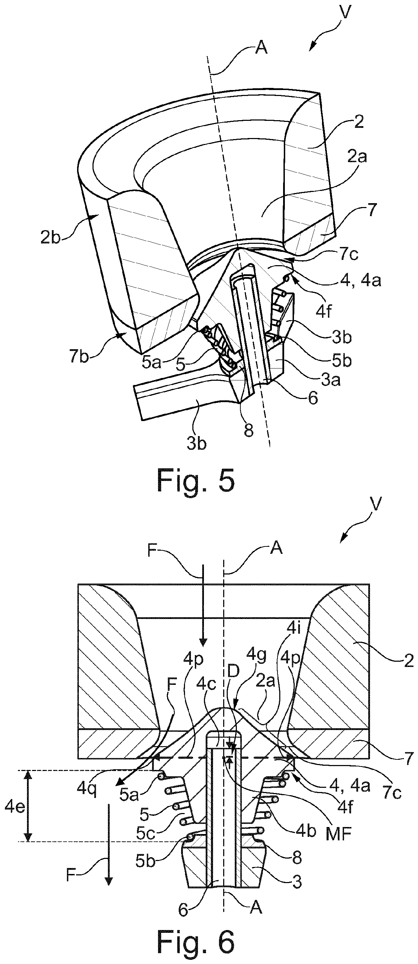

Die Figuren 5 und 6 zeigen ein einziges Schliessventil V des in den Figuren 1 bis 3 dargestellten Poppetventils 1 im Detail. Die Aussenflächen 2b und 7b sind an sich Schnittebenen, die zur klareren Darstellung der übrigen Merkmale jedoch nicht schraffiert dargestellt sind. Die Feder 5 weist einen Innenraum 5c auf und ist entlang des Teilabschnittes 4e derart ausgestaltet und angeordnet, dass die Feder 5 sowohl das Führungsteil 6 als auch den Führungsabschnitt 4b des Schliesselements 4 von aussen umschliesst, wobei die Feder 5 nur am ersten Federende 5a direkt mit dem Schliesselement 4 im Kontakt ist und an der Auflage 4f aufliegt beziehungsweise anliegt. Die Feder 5 ist in der Seitenansicht gemäss Figur 6 konisch verlaufend ausgestaltet, und in der Draufsicht spiralförmig verlaufend ausgestaltet, wobei die Windungen der Feder 5 vorzugsweise derart ausgestaltet sind, dass benachbarte Windungen bei einer Bewegung des Schliesselementes 4 in axialer Richtung A nicht zusammenschlagen können. Vorteilhafterweise sind die Windungen derart weit vom Führungsabschnitt 4b beabstandet, dass die Feder 5, mit Ausnahme der Auflage 4f, nicht am Schliesselement 4 reibt beziehungswiese dieses nicht berührt, was einen äusserst geringen Verschleiss der Feder 5 beziehungsweise des Führungsabschnittes 4b zur Folge hat. Die Auflage 4f kann in einer Vielzahl von Möglichkeiten ausgestaltet sein, und beispielsweise Vertiefungen zum Führen des ersten Federendes 5a aufweisen, oder Befestigungsmöglichkeinen zum Führen und/oder Halten des ersten Federendes 5a aufweisen. Das erfindungsgemässe Poppetventil 1 weist den Vorteil auf, dass ein durchströmendes Fluid F nur einen geringen Strömungswiderstand erfährt.

Wie insbesondere aus Figur 6 ersichtlich weist das Schliesselement 4 eine zum Einlasskanal 2a hin zugewandte Stirnseite 4g auf, wobei diese Stirnseite 4g im Wesentlichen kegelförmig oder pfeilförmig verlaufend ausgestaltet ist. Die Stirnseite 4g kann in einer Vielzahl von Möglichkeiten ausgestaltet sein. Bei einem vielsitzigen Poppetventil 1, das heisst einem Poppetventil 1 umfassend eine Mehrzahl von Schliessventilen V, das in Kombination mit einem Hochdruckgaskompressor verwendet wird, ist es vorteilhaft die Stirnseite 4g aerodynamisch auszugestalten, vorteilhafterweise indem die Stirnseite 4g kegelförmig, pfeilförmig und/oder konvex verläuft und ausgehend vom Zentrum in einer sanft verlaufenden Krümmung zum Rand der Stirnseite 4g verläuft, wobei die Krümmung vorzugsweise auch konkav verlaufende Abschnitte 4i aufweisen kann. Diese Ausgestaltung reduziert den Druckverlust an der Stirnseite 4g und/oder leitet den Fluidstrom F derart quer zur Achsrichtung A, dass dieser, wie aus Figur 2 durch die Teilströme F1, F2 ersichtlich, nach dem Durchtritt durch den Ventilsitz 7a vorzugsweise durch den bauteilfreien Zwischenraum und danach durch einen Zwischenraum 3c des Fängers 3 hindurchströmt.

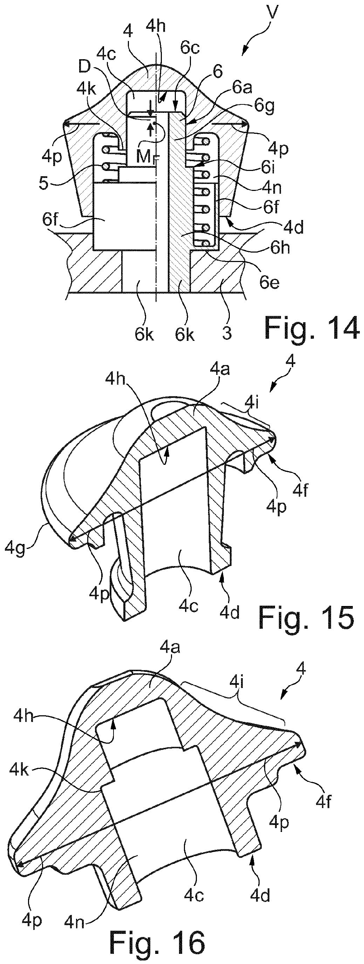

Wie aus Figur 6 ersichtlich weist das Schliesselement 4 einen Schliesskopf 4a mit einer zum Ventilsitz 7a hin zugewandte Stirnseite 4g auf, wobei sich die Stirnseite 4g beziehungsweise der in Figur 6 dargestellte Querschnitt des Schliesselements 4 in axialer Richtung A vom Einlasskanal 2a zum Fänger 3 hin bis zu einem maximalen Umfang 4q erweitert, sodass sich ein maximaler Aussendurchmesser 4p ausbildet. Der maximale Umfang 4q sowie der maximale Aussendurchmesser 4p ist beispielsweise auch in Figur 15 anschaulich dargestellt. Der maximale Aussendurchmesser 4p umfasst, wie aus Figur 6 ersichtlich, diejenigen Stellen des Schliesselements 4, welche bezüglich einer Senkrechten zur axialen Achse A den grössten Abstand zur axialen Achse A aufweisen. In Figur 6 ist zudem der Umfangsmittelpunkt M_{F} des maximalen Umfangs 4q beziehungsweise des maximalen Aussendurchmessers 4p dargestellt. Dieser Umfangsmittelpunkt M_{F} liegt im Führungsinnenraum 4c des Schliesselementes 4. Bei einem durch das geöffnete Ventil V durchströmenden Fluid verursachen die im Bereich des maximalen Umfang 4q angreifenden Strömungskräfte oft das grösste Drehmoment, welches am Schliesselement 4 angreift. Der Umfangsmittelpunkt M_{F} bildet zudem den Mittelpunkt dieses angreifenden Drehmomentes.

Das Schliesselement 4 und das Führungsteil 6 sind im Ventil V, wie in Figur 6 dargestellt, derart gegenseitig angepasst ausgestaltet und angeordnet, dass das Führungsteil 6 zum Einlasskanal 2a hin an einem Führungsteilende 6c endet, und dass der Umfangsmittelpunkt M_{F} zumindest bei vollständig geöffnetem Schliesselement 4 innerhalb des Verlaufs des Führungsteils 6 zu liegen kommt, das heisst innerhalb der Distanz in axialer Richtung A entlang welcher sich das Führungsteil 6 erstreckt zu liegen kommt, oder in anderen Worten, dass zumindest bei vollständig geöffnetem Schliesselement 4 sich der Umfangsmittelpunkt M_{F} in axialer Richtung A näher beim Fänger 3 befindet als das Führungsteilende 6c des Führungsteils 6. Wie in Figur 6 dargestellt ist der Umfangsmittelpunkt M_{F} um eine Distanz D bezüglich dem Führungsteilende 6c beabstandet. Diese Distanz D ist zumindest bei vollständig geöffnetem Schliesselement grösser oder gleich 0 mm. Diese Distanz D ist vorteilhafterweise auch bei am Ventilsitz 7a anliegendem Schliesselement 4 grösser oder gleich 0 mm. Diese Ausgestaltung weist den Vorteil auf, dass der Umfangsmittelpunkt beziehungsweise der Drehpunkt M_{F} eines am Schliesselement 4 angreifenden Drehmomentes, insbesondere eines am maximalen Umfangs 4q beziehungsweise am maximalen Aussendurchmesser 4p angreifenden Drehmomentes in einem Bereich liegt, an dem das Schliesselement 4 am Führungsteil 6 anliegt und von diesem in axialer Richtung A geführt wird. Dies reduziert oder verhindert ein Verkippen des Schliesselementes 4 bezüglich des Führungsteils 6, und dies reduziert zudem den Verschleiss des Führungsinnenraums 4c des Schliesselementes 4 sowie den Verschleiss des Führungsteils 6. Die beschriebene Anordnung gewährleistet somit eine ausgezeichnete Linearführung des Schliesselementes 4 in axialer Richtung A. Dies Linearführung ist von besonderer Bedeutung, weil am Schliesselement in geöffnetem Zustand durch die Fluidströmung F und sich ergebende Strömungsturbulenzen unterschiedliche, zeitlich veränderliche und teilweise grössere Kräfte am Schliesselement 4 angreifen, welche bestrebt sind, das Schliesselement 4 aus der Bewegung in axialer Richtung A abzulenken. Eine solche Ablenkung der Bewegung hat zur Folge, dass das Schliesselement 4 einseitig am Ventilsitz 7a anschlagen kann, was den Verschleiss an der Stirnseite 4g des Schliesselementes 4 erheblich erhöht. Zudem erhöht sich der Verschleiss im Führungsinnenraum 4c, sodass das Schliesselement 4 in axialer Richtung schlechter geführt ist, was wiederum die Stirnseite 4g schneller verschleisst. Die beschriebene Ausgestaltung des Schliesselementes in Kombination mit der Anordnung des Führungsteils 6 weist somit den Vorteil auf, dass der Verschleiss wesentlich reduziert ist.

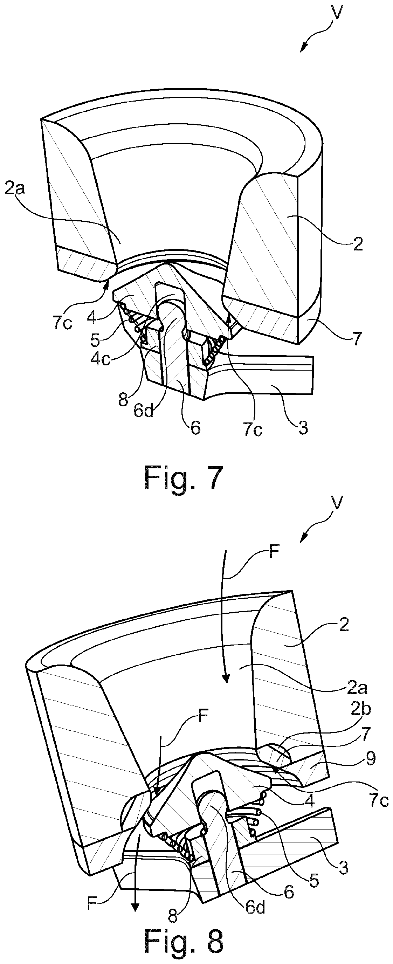

Die Figuren 7 bis 11 zeigen weitere Ausführungsbeispiele einzelner Schliessventile V, welche bei dem in den Figuren 1 bis 3 dargestellten Poppetventil 1 verwendet werden könnten. Figur 7 zeigt ein zweites Ausführungsbeispiel eines Schliessventils, wobei das Führungsteil 6 ein kugelförmiges Endteil 6d aufweist, sodass das Schliesselement 4 bezüglich dem Führungsteil 6 nebst der Linearbewegung bzw. der Gleitbewegung zudem noch eine Kippbewegung ausführen kann. Dadurch kann sich das Schliesselement 4 in geschlossenem Zustand besonders gut an die Lage bzw. den Verlauf des Ventilsitzes 7a anpassen.

Figur 8 zeigt ein drittes Ausführungsbeispiel eines Schliessventils. Unter dem Ventilsitzdeckel 2 ist eine Fluidleitplatte 9 angeordnet, welche dazu dienen, das einströmende Fluid F nach dem Passieren der Einlassöffnung 2a und dem Schliesselement 4 wieder auszurichten, vorzugsweise in eine im Wesentlichen parallel zur Achse A verlaufenden Strömungsrichtung. Vorteilhafterweise umfasst der Ventilsitzdeckel 2 eine Nut 2b, in welcher ein ringförmiges Verschleissteil 7 angeordnet ist. Das ringförmige Verschleissteil 7 weist den Vorteil auf, dass dieses besonders leicht ersetzt werden kann, und dass Materialien verwendet werden können, die für eine plattenförmige Ausgestaltung, wie in Figur 7 mit der Sitzplatte 7 dargestellt, weniger gut geeignet sind. Geeignete Materialien für das ringförmige Verschleissteil 7 sind beispielsweise Kunststoff, wie PEEK (Polyetheretherketon) und insbesondere Faserverstärktes PEEK oder Elastomere, insbesondere gummiartige Materialien, oder auch Metall. In einer vorteilhaften Ausgestaltung ist das ringförmige Verschleissteil 7 aus Metall gefertigt. Das in Figur 8 dargestellte Poppetventil 1 weist den weiteren Vorteil auf, dass das Verschleissteil 7 innerhalb der Bauhöhe des Ventilsitzdeckels 2 angeordnet ist, sodass keine plattenförmige Sitzplatte erforderlich ist. Dies ermöglicht eine grössere Dicke des Ventilsitzes 7a beziehungsweise eine geringere Bauhöhe des Poppetventils 1. In einer weiteren möglichen Ausführungsform könnte bei dem in Figur 8 dargestellten Poppetventil 1 auch auf die Fluidleitplatte 9 verzichtet werden.

Zudem könnte das Führungsteil 6, wie in Figur 5 dargestellt, auch als linear verlaufendes Führungsteil 6 ausgestaltet sein, ohne kugelförmiges Endteil 6d.

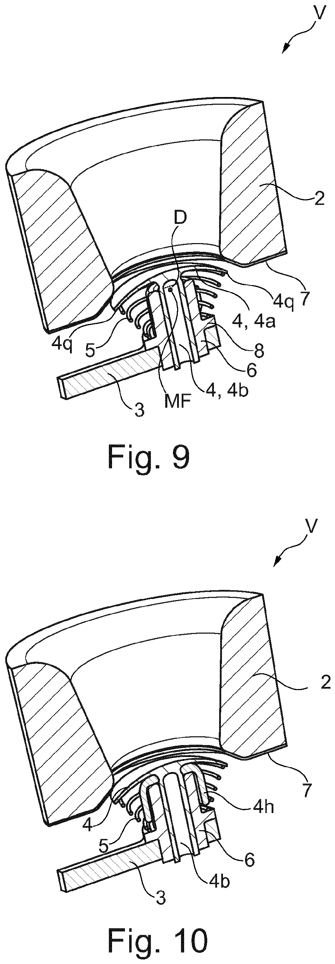

Figur 9 zeigt ein viertes Ausführungsbeispiel eines Schliessventils. Das Führungsteil 6 ist hohlzylinderförmig ausgestaltet. Das Schliesselement 4 umfasst einen zylinderförmigen Führungsabschnitt 4b, und das Führungsteil 6 und der Führungsabschnitt 4b sind derart gegenseitig angepasst ausgestaltet, dass diese in axialer Richtung A ein Gleitlager ausbilden. Das Schliesselement 4 lässt sich bei dieser Ausführungsform besonders kostengünstig und massenarm herstellen. In einer vorteilhaften Ausgestaltung ist das Schliesselement 4 aus Metall hergestellt. In einer weiteren vorteilhaften Ausgestaltung ist das Schliesselement 4 zweiteilig ausgestaltet und umfasst einen Schliesskopf 4a, ausgestaltet als Ventilteller, und einen Führungsabschnitt 4b, ausgestaltet als ein Stift bzw. ein zylinderförmiges Röhrchen. Vorteilhafterweise sind der Schliesskopf 4a und der Führungsabschnitt 4b aus einem unterschiedlichen Material gefertigt, und vorzugsweise zweiteilig ausgestaltet und über eine Verbindung, zum Beispiel eine Clipverbindung, auf einfache Weise verbindbar. Der Schliesskopf 4a könnte beispielsweise aus Metall und der Führungsabschnitt 4b aus einem Kunststoff gefertigt sein. Im Ausführungsbeispiel gemäss Figur 9 sind der maximale Aussendurchmesser 4g sowie das Ende 6c des Führungsteils 6 wie bereits in Figur 6 beschrieben wiederum vorzugsweise derart ausgestaltet, dass die Distanz D zumindest bei vollständig geöffnetem Schliesselement 4 grösser oder gleich 0 mm ist, und vorteilhafterweise auch bei geschlossenem Schliesselement 4 grösser oder gleich 0 mm ist.

Figur 10 zeigt ein fünftes Ausführungsbeispiel, bei welchem das Schliesselement 4, im Vergleich zu der in Figur 9 dargestellten Ausführungsform, zudem noch aussen am Führungsteil 6 durch eine Aussenführung 4h geführt ist. In einer weiteren möglichen Ausführungsform könnte bei dem in Figur 10 dargestellten Schliesselement 4 auch auf den Führungsabschnitt 4b verzichtet werden, sodass das Schliesselement nur noch durch die Aussenführung 4h geführt ist.

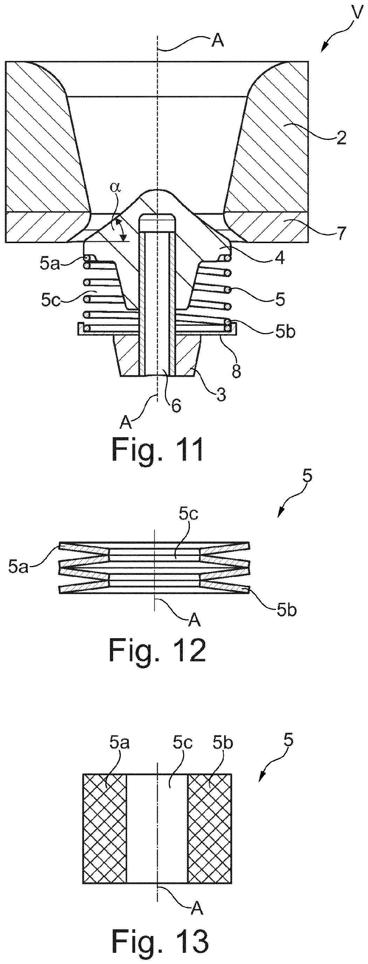

Figur 11 zeigt ein sechstes Ausführungsbeispiel, bei welchem die Feder 5 als parallel verlaufende Spiralfeder bzw. Schraubenfeder ausgestaltet ist. Die Figur 12 zeigt ein weiteres Ausführungsbeispiel einer Druckfeder 5 mit Innenraum 5c, wobei die Druckfeder 5 eine Mehrzahl von Tellerfedern umfasst, welche in einem Stapel in Verlaufsrichtung der Achse A nacheinander folgend angeordnet sind. Die Figur 13 zeigt ein weiteres Ausführungsbeispiel einer Druckfeder 5 mit Innenraum 5c, wobei die Druckfeder 5 als Gummifeder ausgestaltet ist.

Das erfindungsgemässe Poppetventil 1 erlaubt es, Federn 5 zu verwenden, die im Vergleich zu bekannten Poppetventilen einen grösseren Aussendurchmesser aufweisen. Der grössere Federdurchmesser ergibt den Vorteil, dass die Spannungen in der Feder beträchtlich reduziert werden. Bei gleichem Hub, Federkonstante und Material ist die Spannung in einer zylindrischen Feder abhängig vom mittleren Durchmesser der Feder. Im Vergleich zum Stand der Technik weisen die erfindungsgemässen Poppetventile 1 einen wesentlich grösseren mittleren Federdurchmesser auf, sodass die verwendeten Federn 5 eine geringere Spannung aufweisen, und letztendlich einen geringeren Verschleiss. Beim erfindungsgemässen Poppetventil 1 ist es zudem möglich Federn 5 mit geringerer Windungszahl zu verwenden, und die Spannungen in der Feder 5 trotzdem in einem tolerierbaren Bereich zu halten. Das erfindungsgemässe Poppetventil weist somit den Vorteil auf, dass Federn 5 mit geringerer Windungszahl verwendet werden können, sodass vorteilhafterweise die Bauhöhe des gesamten Poppetventils reduziert werden kann.

Figur 14 zeigt ein siebtes Ausführungsbeispiel eines einzelnen Ventilelementes V eines Poppetventils, rechts im Längsschnitt und links teilweise im Längsschnitt. Das Führungsteil 6 ist über einen Befestigungsabschnitt 6k am Fänger 3 befestigt. Das Führungsteil 6 umfasst einen Abschnitt 6h mit grösserem Durchmesser, einen Absatz 6i und danach einen Abschnitt 6g mit kleinerem Durchmesser. Zudem umfasst das Führungsteil 6 ein Basisteil 6e, ausgehend vom dem eine hohlzylinderförmige Aussenführung 6f angeordnet ist. Zudem umfasst das Führungsteil 6 eine Stirnbeziehungsweise Endseite 6c. Das Schliesselement 4 umfasst einen ersten Führungsinnenraum 4c, welcher am Abschnitt 6g mit kleinerem Durchmesser anliegt, und umfasst einen zweiten Führungsinnenraum 4n, welcher an der Aussenführung 6f anliegt, sodass das Schliesselement 4 am Abschnitten 6g sowie an der Aussenführung 6f anliegt. Im zweiten Führungsinnenraum 4n ist die Feder 5 angeordnet. Der Hubweg in axialer Richtung A ist begrenzt durch den zweiten Anschlag 4h und die Stirnseite 6c des Führungsteils und/oder durch den Absatz 6i und den dritten Anschlag 4k und/oder durch den ersten Anschlag 4d und die Oberfläche des Fängers 3. Im Ausführungsbeispiel gemäss Fig. 14 ist das Schliesselement 4 besonders gut in linearer Richtung, das heisst in Verlaufsrichtung der Achse A geführt.

Figur 15 zeigt einen perspektivischen Längsschnitt eines Schliesselementes 4, umfassend einen Schliesskopf 4a mit einem maximalen Aussendurchmesser 4p, wobei der Schliesskopf 4a einen konkav verlaufenden Abschnitt 4i umfasst. Zudem umfasst das Schliesselement 4 einen Führungsinnenraum 4c mit zweitem Anschlag 4h, einen ersten Anschlag 4d mit vergrösserter Wandstärke, sowie eine Federauflage 4f.

Figur 16 zeigt einen perspektivischen Längsschnitt eines Schliesselementes 4, umfassend einen Schliesskopf 4a mit einem maximalen Aussendurchmesser 4p, wobei der Schliesskopf 4a einen konkav verlaufenden Abschnitt 4i umfasst. Zudem umfasst das Schliesselement 4 einen Führungsinnenraum 4c mit zweitem Anschlag 4h, einen zweiten Führungsinnenraum 4n mit grösserem Innendurchmesser, sodass ein dritter Anschlag 4k ausbildet ist, ein erster Anschlag 4d mit vergrösserter Wandstärke sowie eine Federauflage 4f.

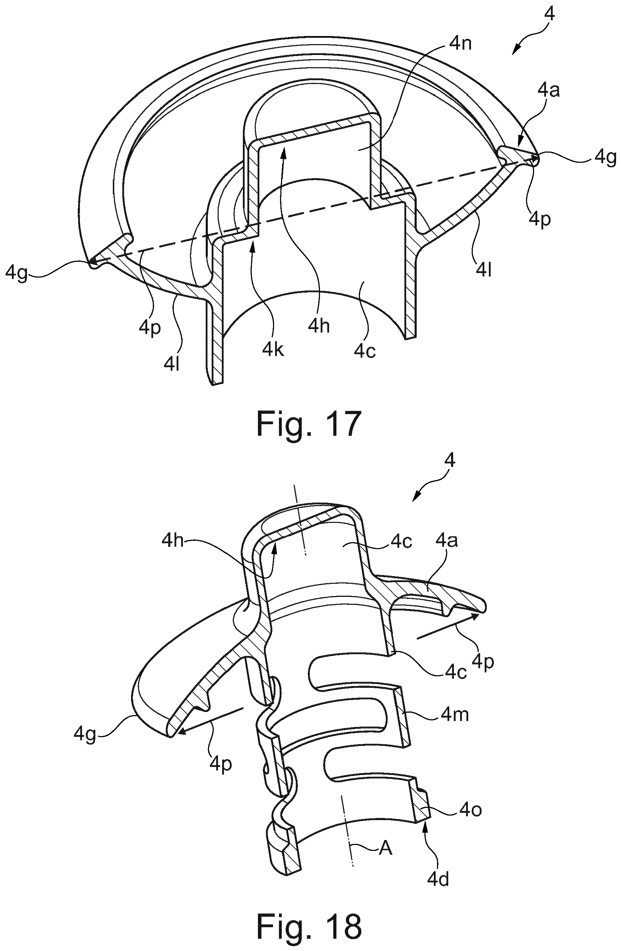

Figur 17 zeigt einen perspektivischen Längsschnitt eines Schliesselementes 4, umfassend einen Schliesskopf 4a mit einem maximalen Aussendurchmesser 4p, wobei der Schliesskopf 4a über ein Verbindungsteil 41 mit dem Führungsabschnitt 4c verbunden ist. Der Führungsabschnitt 4c umfasst einen zweiten Anschlag 4h, welcher den Führungsabschnitt 4c gegen oben gasdicht abschliesst. Der Führungsabschnitt 4c kann entlang der gesamten Länge denselben Innendurchmesser aufweisen, oder wie in Figur 17 dargestellt, einen Absatz 4k aufweisen, sodass der zweite Führungsinnenraum 4n einen kleineren Innendurchmesser aufweist, als der vorhergehende Führungsinnenraum 4c. Das in Figur 17 dargestellte Schliesselement 4 ist vorzugsweise aus Metall herstellt, vorzugsweise aus einem dünnen Metall, sodass das Schliesselement 4 vorteilhafterweise ein geringes Gewicht und vorteilhafterweise eine hohe Verschleissfestigkeit aufweist.

Figur 18 zeigt einen perspektivischen Längsschnitt eines Schliesselementes 4, umfassend einen Schliesskopf 4a mit einem maximalen Aussendurchmesser 4p. Zudem umfasst das Schliesselement 4 einen Führungsinnenraum 4c mit einem zweiten Anschlag 4h. Der Schliesskopf 4a ist über einen Federabschnitt 4m mit dem Basisteil 4o verbunden, wobei das Basisteil 4o zudem den ersten Anschlag 4d ausbildet. Der Federabschnitt 4m besteht vorzugsweise aus demselben Material wie das übrige Schliesselement, 4, wobei das Schliesselement 4 vorzugsweise aus einem Stück besteht. Die Ausnehmungen in der Aussenwand des Federabschnitten 4m können auf unterschiedliche Weise ausgestaltet sein, um dem Schliesselement 4 zwischen Schliesskopf 4a und Basisteil 4o eine in axialer Richtung A federnde Eigenschaft zu verleihen.

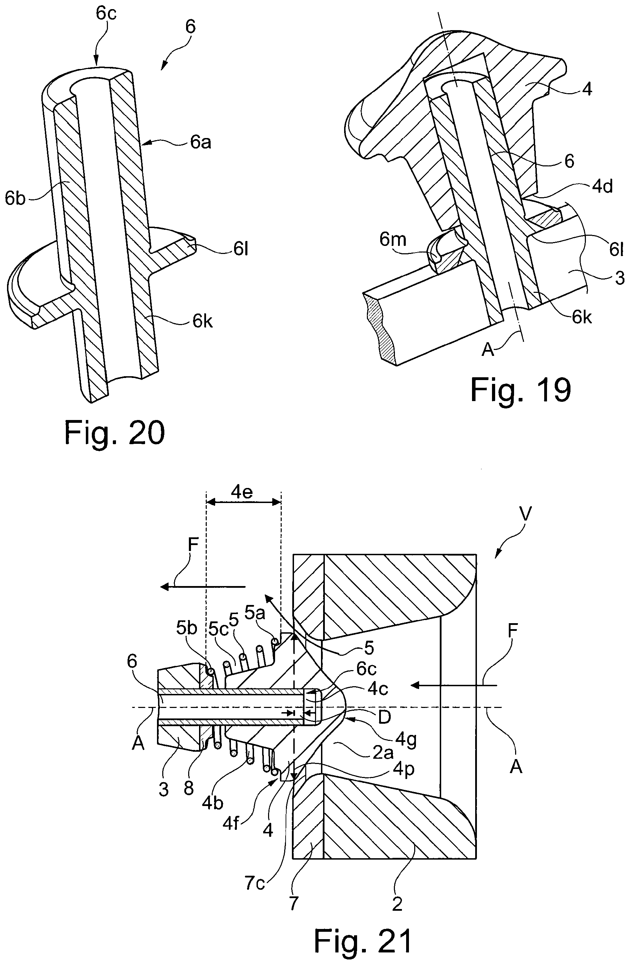

Figur 19 zeigt einen perspektivischen Längsschnitt durch ein Führungsteil 6 sowie ein am Führungsteil in axialer Richtung A verschiebbar, linear beweglich gelagertes Schliesselement 4. Das Führungsteil 6 umfasst zudem einen Anschlag 61, dem nachfolgend ein Befestigungsabschnitt 6k angeordnet ist. Der Anschlag 61 dient als Anschlag um die Einschubtiefe des Befestigungsabschnittes 6k in den Fänger 3 zu begrenzen. In einer vorteilhaften Ausgestaltung ist der Befestigungsabschnitt 6k von einem Federabschnitt 6m umgeben, der in axialer Richtung A federnde Eigenschaften aufweist. Das Führungsteil 6 könnte auch einteilig gefertigt sein, wobei das Material des Federabschnittes 6m aus einem weicheren und/oder elastischeren Material gefertigt sein könnte als das übrige Führungsteil 6.

Figur 20 zeigt einen perspektivischen Längsschnitt durch ein Führungsteil 6 umfassend ein in radialer Richtung vorstehendes Anschlagteil 61, einen Befestigungsabschnitt 6k sowie einen Führungsabschnitt 6b mit zylinderförmiger Oberfläche 6a und Stirnseite 6c.

Figur 21 zeigt das bereits in Figur 6 dargestellte Ventil V, wobei das Ventil V in Figur 21 in einem vertikal verlaufenden Ventilkörper 2 angeordnet ist.

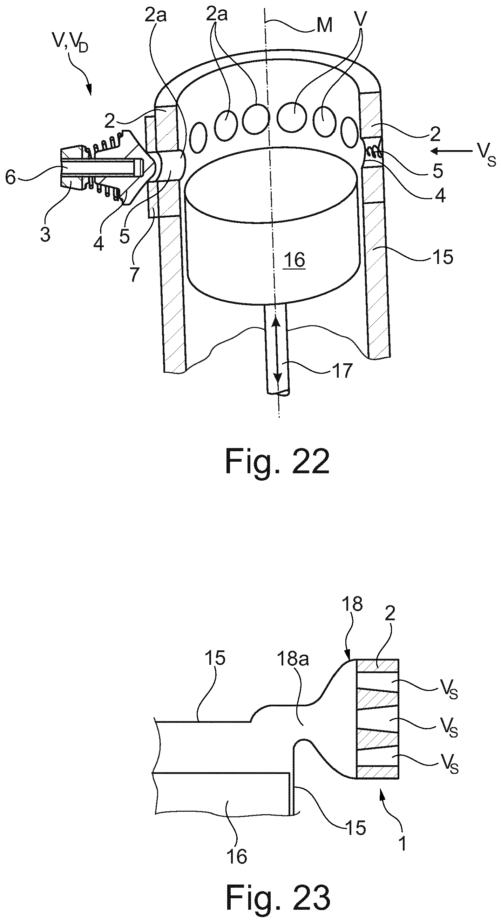

Figur 22 zeigt einen Längsschnitt durch einen Kolbenkompressor umfassend einen Zylinder 15, einen Kolben 16, sowie eine Kolbenstange 17, wobei der Kolben 16 in Verlaufsrichtung der Mittenachse M des Zylinders 15 hin und her beweglich gelagert ist. Oben ist anschliessend an den Zylinder 15 ein hohlzylinderförmiger Ventilkörper 2 angeordnet, mit einer Mehrzahl von Ventilen V, welche in Umfangsrichtung gegenseitig beabstandet angeordnet sind. Die einzelnen Ventile V sind beispielsweise wie in Figur 21 dargestellt ausgestaltet, wobei die Halteplatte 7 hohlzylinderförmig ausgestaltet ist und den Ventilkörper 2 umschliesst. Zudem ist ein Fänger 3 erforderlich, welcher mit dem Ventilkörper 2 oder dem Zylinder 15 verbunden ist, und welcher den Ventilkörper 2 in einer vorteilhaften Ausgestaltung umschliesst. Figur 22 zeigt links oben ein Ventil V, das als ein Druckventil V_{D} angeordnet ist, bei welche die Einlasskanäle 2a an der Innenseite des Zylinders 15 beginnen, sodass die Schliesselemente 4 gegen Aussen angeordnet sind. Die Einlasskanäle 2a verlaufen vorzugsweise radial zur Mittenachse M des Zylinders 15. Die Ventile V können auch umgekehrt angeordnet sein, wie in Figur 22 rechts oben dargestellt, bei dem die Einlasskanäle 2a an der Aussenseite beginnen, und die Schliesselemente 4 gegen die Innenseite des Zylinders 15 hin angeordnet sind, sodass das Ventil V als Saugventil V_{S} wirkt. Der Ventilkörper 2 könnte auch als Teil des Zylinders 15 ausgestaltet sein, beispielsweise indem der Zylinder 15 Bohrungen aufweist, welche den Einlasskanal 2a und vorzugsweise auch den Ventilsitz 7a ausbilden. Es könnte, wie in Figur 22 oben dargestellt, in Verlaufsrichtung der Mittenachse M zudem unterhalb des Zylinders 15 ein weiterer hohlzylinderförmiger Ventilkörper 2 enthaltend Ventile V angeordnet sein, insbesondere falls der Zylinder 15 doppelwirkend ausgestaltet ist. Die Ventile V können im Ventilkörper 2 beziehungsweise im Zylinder 15 je nach Bedarf als Druckventile V_{D} und/oder als Saugventile V_{S} angeordnet sein. Es besteht eine Vielzahl von Möglichkeiten zur Anordnung der Druckventile V_{D} und der Saugventile V_{S}. So könnte beispielsweise in Figur 23 jedes zweite der in Umfangsrichtung beabstandet angeordneten Ventile V als Druckventil V_{D} ausgestaltet sein, beziehungsweise jedes zweite als Saugventil V_{S}, sodass in Umfangsrichtung nacheinander folgend jeweils ein Druckventil V_{D} und nachfolgend ein Saugventil Vs angeordnet ist. In einem weiteren Ausführungsbeispiel könnten alle Druckventile V_{D} oder alle Saugventile V_{S} in Umfangsrichtung zur Mittenachse M entlang eines vorgegebenen Winkels von beispielsweise 90°, 180° oder 360° angeordnet sein. So könnten in Figur 22 beispielsweise alle Druckventile V_{D} entlang von 180° und nachfolgend alle Saugventile Vs entlang von 180° angeordnet sein, sodass alle Ventile V im Zylinder 15 beziehungsweise im Ventilkörper 2 in Verlaufsrichtung der Mittenachse M auf derselben Höhe angeordnet sind. In einem weiteren Ausführungsbeispiel können die Ventile V auch in Verlaufsrichtung der Mittenachse M versetzt angeordnet sein, sodass beispielsweise die Druckventile V_{D} entlang eines vorgegebenen Winkels von beispielsweise 90°, 180° oder 360° angeordnet sind, und sodass die Saugventile V_{S} entlang eines vorgegebenen Winkels von beispielsweise 90°, 180° oder 360°, jedoch in Verlaufsrichtung der Mittenachse M versetzt angeordnet sind. Die Druckventile V_{D} und Saugventile V_{S} könnten auch in Umfangsrichtung nacheinander in Verlaufsrichtung der Mittenachse M versetzt angeordnet sein. Zudem könnten die Druckventile V_{D} und Saugventile V_{S} in Gruppen angeordnet sein, indem beispielsweise in Umfangsrichtung 2 Ventile V als Druckventile V_{D} und jeweils das dritte Ventil V als Saugventil Vs ausgestaltet ist.

Die Figur 23 zeigt ein weiteres Ausführungsbeispiel eines Poppetventils 1 umfassend je einen Ventilkörper 2 mit einer Mehrzahl von daran oder darin angeordneten Druckventilen V_{D}. Das Poppetventil 1 ist über ein sogenanntes Ventilnest 18 und einen Auslasskanal 18a Fluid leitend mit dem Innenraum gebildet aus einem Zylinder 15 und einem Kolben 16 verbunden. Die Ausführungsbeispiele zeigen nur Druckventile V_{D}. Es könnten jedoch auch nur Saugventile V_{S} angeordnet sein, sodass der Innenraum über einen Einlasskanal 18a und das Ventilnest 18 zum Poppetventil 1 mündet. In dem Ausführungsbeispiel gemäss Fig. 23 können im Poppetventil 1 beziehungsweise im Ventilkörper 2 sowohl Saugventile V_{S} als auch Druckventile V_{D} angeordnet sein, sodass ein Ein- und Auslasskanal 18a den Zylinderinnenraum mit dem Ventilnest 18 und dem Poppetventil 1 verbindet.

Der Ventilkörper 2 kann in einer Vielzahl von Ausführungsformen ausgestaltet sein, sodass die in Figur 2 und 23 dargestellten Ausführungsbeispiele von Ventilkörper 2 nur beispielhaft zu verstehen sind. Ein Vorteil des erfindungsgemässen Poppetventils 1 ist darin zu sehen, dass der Ventilkörper 2 eine Vielzahl von Formen aufweisen kann, in welchem die Ventile V, wie in den Ausführungsbeispielen dargestellt, angeordnet sind. Das erfindungsgemässe Poppetventil 1 kann je nach Erfordernis Saug- oder Druckventile V_{S}, V_{D} oder eine Kombination der beiden Ventile aufweisen.

In einer vorteilhaften Ausgestaltung umfasst das Poppetventil 1 für einen Kolbenkompressor einen Fänger 3, einen Ventilkörper 2 mit einer Mehrzahl von Einlasskanälen 2a, wobei jeder Einlasskanal 2a in einen Ventilsitz 7a mündet, und umfasst eine Mehrzahl von in einer axialen Richtung A beweglichen Schliesselementen 4, wobei jedem Einlasskanal 2a ein Schliesselement 4 zugeordnet ist, und wobei der Ventilsitz 7a in axialer Richtung A gegenüber liegend dem zugeordneten Schliesselement 4 angeordnet ist, derart, dass der Ventilsitz 7a durch das Schliesselement 4 verschliessbar ist, wobei zwischen dem Fänger 3 und dem Schliesselement 4 eine Feder 5 angeordnet ist, um auf das Schliesselement 4 eine zum Ventilsitz 7a hin ausgerichtete Vorspannkraft zu bewirken, wobei am Fänger 3 ein in axialer Richtung A verlaufendes Führungsteil 6 angeordnet ist, an welchem das Schliesselement 4 in axialer Richtung A beweglich geführt ist, wobei das Schliesselement 4 einen Schliesskopf 4a und einen Führungsabschnitt 4b umfasst, wobei der Schliesskopf 4a und der Führungsabschnitt 4b in der axialen Richtung A nacheinander folgen, wobei das Schliesselement 4, ausgehend vom Führungsabschnitt 4b, einen sich in axialer Richtung A ins Innere des Schliesselementes 4 in Richtung zum Schliesskopf 4a hin erstreckenden Führungsinnenraum 4c aufweist, in welchem auch das Führungsteil 6 verläuft, wobei der Schliesskopf 4a eine Stirnseite 4g aufweist, welche sich in axialer Richtung A, in Richtung zum Führungsabschnitt 4b hin, bis zu einem maximalen Umfang 4q erweitert, wobei der maximale Umfang 4q einen Umfangsmittelpunkt M_{F} aufweist, und wobei sich der Führungsinnenraum 4c zumindest derart weit in Richtung zum Schliesskopf 4a hin erstreckt, dass der Umfangsmittelpunkt M_{F} innerhalb des Führungsinnenraumes 4c zu liegen kommt.

Das Poppetventil ist vorzugsweise derart ausgestaltet, dass der Umfangsmittelpunkt M_{F} zumindest bei vollständig geöffnetem Schliesselement 4 innerhalb des Verlaufs des Führungsteils 6 zu liegen kommt, wie dies beispielsweise in Figur 6 dargestellt ist.

Das Poppetventil ist vorzugsweise derart ausgestaltet, dass der Umfangsmittelpunkt M_{F} auch bei geschlossenem Schliesselement 4 innerhalb des Verlaufs des Führungsteils 6 zu liegen kommt.

Das Poppetventil ist vorzugsweise derart ausgestaltet, dass die Stirnseite 4g im Wesentlichen oder bereichsweise kegelförmig oder pfeilförmig verlaufend ausgestaltet ist, wie dies beispielsweise in Figur 5, 6 oder 16 dargestellt ist.

Das Poppetventil ist vorzugsweise derart ausgestaltet, dass die Oberfläche der Stirnseite 4g zumindest im Bereich von deren Peripherie bezüglich einer Normalen zur axialen Richtung A einen Steigungswinkel α von zumindest 10° aufweist, wie dies beispielsweise in Figur 11 dargestellt ist.

Das Poppetventil ist vorzugsweise derart ausgestaltet, dass die Stirnseite 4g entlang der Oberfläche, von der Peripherie zur Mitte hin, zumindest abschnittweite einen konkav verlaufenden Abschnitt 4i aufweist, wie dies beispielsweise in den Figuren 6, 15 und 16 dargestellt ist.

Das Poppetventil ist vorzugsweise derart ausgestaltet, dass der Führungsabschnitt 4b eine Aussenkontur mit in Richtung zum Fänger 3 hin zunehmend kleinerem Durchmesser aufweist, wie dies beispielsweise in den Figuren 2, 5 oder 6 dargestellt ist. Der Führungsabschnitt 4b weist dadurch einen geringeren Strömungswiderstand auf.

Das Poppetventil ist vorzugsweise derart ausgestaltet, dass das Führungsteil 6 und der Führungsabschnitt 4b einen runden Querschnitt aufweisen, sodass diese gemeinsam eine Längsführung und insbesondere ein Gleitlager ausbilden.

Das Poppetventil ist vorzugsweise derart ausgestaltet, dass der Führungsabschnitt 4b einen ersten Führungsinnenraum 4c mit kleinerem Innenquerschnitt umfasst und in axialer Richtung A nachfolgend einen zweiten Führungsinnenraum 4n mit grösserem Innenquerschnitt umfasst, wie dies beispielsweise in Figur 14 dargestellt ist.

Das Poppetventil ist vorzugsweise derart ausgestaltet, dass zwischen erstem Führungsinnenraum 4c zu zweitem Führungsinnenraum 4n eine Übergangsstelle ausgebildet ist, insbesondere als Verengung oder als Absatz, wie dies beispielsweise in Figur 14 dargestellt ist.

Das Poppetventil ist vorzugsweise derart ausgestaltet, dass das Führungsteil 6 einen Abschnitt mit kleinerem Durchmesser 6g und einen Abschnitt mit grösserem Durchmesser 6h aufweist, welche am ersten beziehungsweise zweiten Führungsinnenraum 4c, 4n anliegen, wie dies beispielsweise in Figur 14 dargestellt ist.

Das Poppetventil ist vorzugsweise derart ausgestaltet, dass der Führungsabschnitt 4b am bezüglich dem Schliesskopf 4a entgegen gesetzten Ende einen ersten Anschlag 4d mit vergrösserter Wandstärke aufweist, wie dies beispielsweise in Figur 15 oder 16 dargestellt ist.

Das Poppetventil ist vorzugsweise derart ausgestaltet, dass der Schliesskopf 4a zum Führungsabschnitt 4b hin eine bezüglich der axialen Richtung A in Umfangsrichtung verlaufende Auflage 4f zur Auflage der Feder 5 aufweist, wie dies beispielsweise in Figur 15 oder 16 dargestellt ist.

Das Poppetventil ist vorzugsweise derart ausgestaltet, dass das Schliesselement 4 nachfolgend dem Führungsabschnitt 4b einen sich in axialer Richtung A erstreckenden Federabschnitt 4m aufweist, wie dies beispielsweise in Figur 18 dargestellt ist.

Das Poppetventil ist vorzugsweise derart ausgestaltet, dass am Schliesskopf 4a ein in axialer Richtung A über die Oberfläche des Schliesskopfs 4a vorstehender Abschluss 4h angeordnet ist, dessen Innenraum Teil des Führungsinnenraumes 4c bildet, wie dies beispielsweise in Figur 18 dargestellt ist.

Das Poppetventil ist vorzugsweise derart ausgestaltet, dass der Schliesskopf 4a im Wesentlichen aus einem ringförmig verlaufenden Dichtfläche besteht, welche derart angeordnet ist, dass diese am Ventilsitz 7a anschlägt, wobei der Schliesskopf 4a über ein Verbindungsteil 41 mit dem Führungsabschnitt 4b verbunden ist, wie dies beispielsweise in Figur 17 dargestellt ist.

Das Schliesselement 4 für ein Poppetventil 1 eines Kolbenkompressors umfasst einen Schliesskopf 4a und einem Führungsabschnitt 4b, wobei der Schliesskopf 4a und der Führungsabschnitt 4b in einer axialen Richtung A nacheinander folgen, wobei das Schliesselement 4, ausgehend vom Führungsabschnitt 4b, einen sich im Innern des Schliesselementes 4 in axialer Richtung A in Richtung zum Schliesskopf 4a hin erstreckenden Führungsinnenraum 4c aufweist, wobei der Schliesskopf 4a eine Stirnseite 4g aufweist, welche sich in axialer Richtung A zum Führungsabschnitt 4b hin bis zu einem maximalen Umfang 4q erweitert, wobei der maximale Umfang 4q einen Umfangsmittelpunkt M_{F} aufweist, und wobei sich der Führungsinnenraum 4c zumindest derart weit in Richtung zum Schliesskopf 4a hin erstreckt, dass der Umfangsmittelpunkt M_{F} innerhalb des Führungsinnenraumes 4c zu liegen kommt.

## Patentansprüche

1. Poppetventil (1) für einen Kolbenkompressor, umfassend einen Fänger (3), einen Ventilkörper (2) mit einer Mehrzahl von Einlasskanälen (2a), wobei jeder Einlasskanal (2a) in einen Ventilsitz (7a) mündet, sowie umfassend eine Mehrzahl von in einer axialen Richtung (A) beweglichen Schliesselementen (4), wobei jedem Einlasskanal (2a) ein Schliesselement (4) zugeordnet ist, und wobei der Ventilsitz (7a) in axialer Richtung (A) gegenüber liegend dem zugeordneten Schliesselement (4) angeordnet ist, derart, dass der Ventilsitz (7a) durch das Schliesselement (4) verschliessbar ist, wobei zwischen dem Fänger (3) und dem Schliesselement (4) eine Feder (5) angeordnet ist, um auf das Schliesselement (4) eine zum Ventilsitz (7a) hin ausgerichtete Vorspannkraft zu bewirken, wobei die Feder (5) einen Innenraum (5c) umschliesst, und wobei am Fänger (3) ein in axialer Richtung (A) verlaufendes Führungsteil (6) angeordnet ist, welches sich bis zu einem Führungsteilende (6c) erstreckt, wobei das Schliesselement (4) am Führungsteil (6) in axialer Richtung (A) beweglich, insbesondere gleitend gelagert ist, **dadurch gekennzeichnet, dass** die Feder (5) das Führungsteil (6) sowie das Schliesselement (4) in axialer Richtung (A) entlang eines Teilabschnittes (4e) von aussen umschliesst, sodass sowohl das Führungsteil (6) als auch das Schliesselement (4) entlang dieses Teilabschnittes (4e) innerhalb des Innenraumes (5c) der Feder (5) angeordnet sind, und dass das vom Fänger (3) ausgehende Führungsteil (6) sich anschliessend an den Teilabschnitt (4e) weiter in axialer Richtung (A) bis zum Führungsteilende (6c) erstreckt.

2. Poppetventil nach Anspruch 1, **dadurch gekennzeichnet, dass** der Ventilkörper (2) deckelförmig ausgestaltet ist.

3. Poppetventil nach Anspruch 1, **dadurch gekennzeichnet, dass** der Ventilkörper (2) sich in Umfangsrichtung um eine Mittenachse (M) erstreckt und bezüglich der Mittenachse (M) hohlzylinderförmig ausgestaltet ist.

4. Poppetventil nach Anspruch 2 oder 3, **dadurch gekennzeichnet, dass** das Schliesselement (4) eine zum Ventilsitz (7a) hin zugewandte Stirnseite (4g) aufweist, wobei sich die Stirnseite (4g) in axialer Richtung (A) zum Fänger (3) hin bis zu einem maximalen Umfang (4q) erweitert, dass der maximale Umfang (4q) einen Umfangsmittelpunkt (M_{F}) aufweist, und dass der Umfangsmittelpunkt (M_{F}) zumindest bei vollständig geöffnetem Schliesselement (4) innerhalb des Verlaufs des Führungsteils (6) zu liegen kommt.

5. Poppetventil nach Anspruch 4, **dadurch gekennzeichnet, dass** der Umfangsmittelpunkt (M_{F}) auch bei geschlossenem Schliesselement (4) innerhalb des Verlaufs des Führungsteils (6) zu liegen kommt.

6. Poppetventil nach einem der vorhergehenden Ansprüche, **dadurch gekennzeichnet, dass** die Feder (5) als Spiralfeder ausgestaltet ist.

7. Poppetventil nach Anspruch 6, **dadurch gekennzeichnet, dass** die Feder (5) ein erstes Federende (5a) und ein zweites Federende (5b) aufweist, und dass die Feder (5) in axialer Richtung (A) zum Ventilsitz (7a) hin einen zunehmenden Durchmesser aufweist, sodass das erste, zum Ventilsitz (7a) ausgerichtete Federende (5a) einen grösseren Durchmesser aufweist als das zweite Federende (5b).

8. Poppetventil nach Anspruch 7, **dadurch gekennzeichnet, dass** sich die Feder (5) zum Ventilsitz (7a) hin konusförmig erweitert.

9. Poppetventil nach einem der Ansprüche 7 oder 8, **dadurch gekennzeichnet, dass** das Schliesselement (4) einen Schliesskopf (4a) umfasst, dass der Schliesskopf (4a) an der dem Ventilsitz (7a) abgewandten Seite eine Auflage (4f) aufweist, und dass das erste Federende (5a) an der Auflage (4f) aufliegt.

10. Poppetventil nach Anspruch 9, **dadurch gekennzeichnet, dass** das Schliesselement (4) und die Feder (5) derart gegenseitig angepasst ausgestaltet sind, dass die Feder (5) das Schliesselement (4) nur an der Auflage (4f) berührt.

11. Poppetventil nach einem der Ansprüche 4 bis 10, **dadurch gekennzeichnet, dass** das Führungsteil (6) zylinderförmig ausgestaltet ist, dass das Schliesselement (4) eine Bohrung (4c) aufweist, und dass das Führungsteil (6) und die Bohrung (4c) derart gegenseitig angepasst ausgestaltet sind, dass diese ein Linearlager, insbesondere ein Gleitlager ausbilden.

12. Poppetventil nach Anspruch 11, **dadurch gekennzeichnet, dass** das Schliesselement (4) aus einem Schliesskopf (4a) und in Verlaufsrichtung der Achse (A) nachfolgend einem Führungsabschnitt (4b) besteht, wobei das Schliesselement (4) konzentrisch ausgestaltet ist und im Zentrum die Bohrung (4c) aufweist.

13. Poppetventil nach einem der Ansprüche 4 bis 10, **dadurch gekennzeichnet, dass** das Führungsteil (6) hohlzylinderförmig ausgestaltet ist, dass das Schliesselement (4) einen zylinderförmigen Führungsabschnitt (4b) umfasst, und dass das Führungsteil (6) und der Führungsabschnitt (4b) derart gegenseitig angepasst ausgestaltet sind, dass diese ein Linearlager, insbesondere ein Gleitlager ausbilden.

14. Poppetventil nach einem der Ansprüche 4 bis 13, **dadurch gekennzeichnet, dass** der Ventilsitz (7a) als ein separater Ventilsitzring ausgestaltet ist, welcher im Ventilsitzdeckel (2) angeordnet ist.

15. Poppetventil nach einem der vorhergehenden Ansprüche, **dadurch gekennzeichnet, dass** das Führungsteil (6) zur Einlassöffnung (2a) hin ein kugelförmiges Endteil (6d) aufweist.

16. Poppetventil nach einem der vorhergehenden Ansprüche, **dadurch gekennzeichnet, dass** der Fänger (3) eine Haltestruktur (3e) aufweist, an welcher die Führungsteile (6) angeordnet sind, wobei die Haltestruktur Zwischenräume (3c) aufweist.

17. Poppetventil nach Anspruch 16, **dadurch gekennzeichnet, dass** die Haltestruktur (3e) als eine Gitterstruktur ausgestaltet ist umfassend eine Vielzahl von Streben (3b) und Knoten (3a) sowie Zwischenräume (3c), wobei die Führungsteile (6) in den Knoten (3a) angeordnet sind.

18. Poppetventil nach einem der Ansprüche 16 bis 17, **dadurch gekennzeichnet, dass** der Fänger (3) eine hohlzylinderförmige Aussenwand (3d) aufweist, welche in axialer Richtung (A) verläuft, und welche die Haltestruktur (3e) in Umfangsrichtung umschliesst.

19. Kolbenkompressor umfassend ein Poppetventil (1) nach einem der vorhergehenden Ansprüche.

## Claims

1. A Poppet valve (1) for a piston compressor, comprising a catcher (3), a valve body (2) with a plurality of inlet channels (2a), each inlet channel (2a) opening into a valve seat (7a), and comprising a plurality of closing elements (4) movable in an axial direction (A), each inlet wherein channel (2a) being assigned a closing element (4), and wherein the valve seat (7a) being arranged opposite the associated closing element (4) in the axial direction (A) in such a way that the valve seat (7a) can be closed by the closing element (4), wherein a spring (5) being arranged between the catcher (3) and the closing element (4) in order to bring about a prestressing force directed towards the valve seat (7a) on the closing element (4), wherein the spring (5) enclosing an interior space (5c), and wherein a guide part (6) which extends in the axial direction (A) and extends as far as a guide part end (6c) is arranged on the catcher (3), wherein the closing element (4) is mounted on the guide part (6) so as to be movable in the axial direction (A), in particular slidingly, **characterized in that** the spring (5) surrounds the guide part (6) and the closing element (4) from the outside in the axial direction (A) along a partial section (4e), so that both the guide part (6) and the closing element (4) are arranged along this partial section (4e) within the interior (5c) of the spring (5), and that the guide part (6) starting from the catcher (3) extends further in the axial direction (A) to the guide part end (6c) following the partial section (4e).

2. The poppet valve as claimed in claim 1, **characterized in that** the valve body (2) is designed in the form of a lid.

3. The poppet valve as claimed in claim 1, **characterized in that** the valve body (2) extends in a circumferential direction about a central axis (M) and is of hollow cylindrical design with respect to the central axis (M).

4. The poppet valve as claimed in claim 2 or 3, **characterized in that** the closing element (4) has a face side (4g) facing toward the valve seat (7a), wherein the face side (4g) widens in the axial direction (A) toward the catcher (3) up to a maximum circumference (4q), **in that** the maximum circumference (4q) has a circumference central point (M_{F}), and **in that** the circumference central point (M_{F}) comes to lie within the profile of the guide part (6) at least when the closing element (4) is fully open.

5. The poppet valve as claimed in claim 4, **characterized in that** the circumference central point (M_{F}) comes to lie within the profile of the guide part (6) also when the closing element (4) is closed.

6. The poppet valve as claimed in one of the preceding claims, **characterized in that** the spring (5) is designed as a spiral spring.

7. The poppet valve as claimed in claim 6, **characterized in that** the spring (5) has a first spring end (5a) and a second spring end (5b), and **in that** the spring (5) has a diameter which increases in the axial direction (A) toward the valve seat (7a), such that the first spring end (5a), directed toward the valve seat (7a), has a greater diameter than the second spring end (5b).

8. The poppet valve as claimed in claim 7, **characterized in that** the spring (5) widens in conical fashion toward the valve seat (7a).

9. The poppet valve as claimed in either of claims 7 and 8, **characterized in that** the closing element (4) comprises a closing head (4a), **in that** the closing head (4a) has a support (4f) on the side averted from the valve seat (7a), and **in that** the first spring end (5a) lies on the support (4f).

10. The poppet valve as claimed in claim 9, **characterized in that** the closing element (4) and the spring (5) are designed in a manner adapted to one another such that the spring (5) makes contact with the closing element (4) only at the support (4f).

11. The poppet valve as claimed in one of claims 4 to 10, **characterized in that** the guide part (6) is of cylindrical design, **in that** the closing element (4) has a bore (4c), and **in that** the guide part (6) and the bore (4c) are designed in a manner adapted to one another such that they form a linear bearing, in particular a plain bearing.

12. The poppet valve as claimed in claim 11, **characterized in that** the closing element (4) is composed of a closing head (4a) and, following the latter in a direction of extent of the axis (A), a guide section (4b), wherein the closing element (4) is of concentric design and, in the center, has the bore (4c).

13. The poppet valve as claimed in one of claims 4 to 10, **characterized in that** the guide part (6) is of hollow cylindrical design, **in that** the closing element (4) comprises a cylindrical guide section (4b), and **in that** the guide part (6) and the guide section (4b) are designed in a manner adapted to one another such that they form a linear bearing, in particular a plain bearing.

14. The poppet valve as claimed in one of claims 4 to 13, **characterized in that** the valve seat (7a) is designed as a separate valve seat ring, which is arranged in the valve seat cover (2).

15. The poppet valve as claimed in one of the preceding claims, **characterized in that** the guide part (6) has, toward the inlet opening (2a), a spherical end part (6d).

16. The poppet valve as claimed in one of the preceding claims, **characterized in that** the catcher (3) has a holding structure (3e) on which the guide parts (6) are arranged, wherein the holding structure has intermediate spaces (3c).

17. The poppet valve as claimed in claim 16, **characterized in that** the holding structure (3e) is designed as a grid structure comprising a multiplicity of struts (3b) and junctions (3a) and intermediate spaces (3c), wherein the guide parts (6) are arranged in the junctions (3a).

18. The poppet valve as claimed in either of claims 16 and 17, **characterized in that** the catcher (3) has a hollow cylindrical outer wall (3d) which runs in the axial direction (A) and which encloses the holding structure (3e) in the circumferential direction.

19. A piston compressor comprising a poppet valve (1) as claimed in one of the preceding claims.

## Revendications

1. Soupape champignon (1) pour un compresseur à piston, comprenant un logement (3), un corps de soupape (2) avec une pluralité de canaux d'entrée (2a), chaque canal d'entrée (2a) débouchant dans un siège de soupape (7a), et comprenant une pluralité d'éléments de fermeture (4) déplaçables dans une direction axiale (A), un élément de fermeture (4) étant associé à chaque canal d'entrée (2a) et le siège de soupape (7a) étant disposé dans la direction axiale (A) à l'opposé de l'élément de fermeture associé (4) de telle sorte que le siège de soupape (7a) puisse être fermé par l'élément de fermeture (4), un ressort (5) étant disposé entre le logement (3) et l'élément de fermeture (4) afin d'exercer sur l'élément de fermeture (4) une force de précontrainte orientée vers le siège de soupape (7a), le ressort (5) entourant un espace interne (5c) et une partie de guidage (6) s'étendant dans la direction axiale (A) étant disposée au niveau du logement (3), laquelle s'étend jusqu'à une extrémité de partie de guidage (6c), l'élément de fermeture (4) étant supporté de manière déplaçable, notamment par glissement, dans la direction axiale (A) sur la partie de guidage (6), **caractérisée en ce que** le ressort (5) entoure par l'extérieur la partie de guidage (6) ainsi que l'élément de fermeture (4) dans la direction axiale (A) le long d'une portion partielle (4e) de telle sorte que la partie de guidage (6) ainsi que l'élément de fermeture (4) soient disposés le long de cette portion partielle (4e) à l'intérieur de l'espace interne (5c) du ressort (5), et **en ce que** la partie de guidage (6) partant du logement (3) s'étend ensuite davantage au niveau de la portion partielle (4e) dans la direction axiale (A) jusqu'à l'extrémité de partie de guidage (6c).

2. Soupape champignon selon la revendication 1, **caractérisée en ce que** le corps de soupape (2) est réalisé en forme de couvercle.

3. Soupape champignon selon la revendication 1, **caractérisée en ce que** le corps de soupape (2) s'étend dans la direction périphérique autour d'un axe médian (M) et est réalisé sous forme cylindrique creuse par rapport à l'axe médian (M).

4. Soupape champignon selon la revendication 2 ou 3, **caractérisée en ce que** l'élément de fermeture (4) présente un côté frontal (4g) tourné vers le siège de soupape (7a), le côté frontal (4g) s'élargissant dans la direction axiale (A) vers le logement (3) jusqu'à une périphérie maximale (4q), **en ce que** la périphérie maximale (4q) présente un centre de périphérie (M_{F}) et **en ce que** le centre de périphérie (M_{F}) vient se placer à l'intérieur de l'étendue de la partie de guidage (6) au moins lorsque l'élément de fermeture (4) est complètement ouvert.

5. Soupape champignon selon la revendication 4, **caractérisée en ce que** le centre de périphérie (M_{F}) vient se placer à l'intérieur de l'étendue de la partie de guidage (6) également lorsque l'élément de fermeture (4) est fermé.

6. Soupape champignon selon l'une quelconque des revendications précédentes, **caractérisée en ce que** le ressort (5) est réalisé sous forme de ressort spiral.

7. Soupape champignon selon la revendication 6, **caractérisée en ce que** le ressort (5) présente une première extrémité de ressort (5a) et une deuxième extrémité de ressort (5b), et **en ce que** le ressort (5) présente, dans la direction axiale (A) vers le siège de soupape (7a), un diamètre croissant de telle sorte que la première extrémité de ressort (5a) orientée vers le siège de soupape (7a) présente un plus grand diamètre que la deuxième extrémité de ressort (5b).

8. Soupape champignon selon la revendication 7, **caractérisée en ce que** le ressort (5) s'élargit sous forme conique vers le siège de soupape (7a).

9. Soupape champignon selon l'une quelconque des revendications 7 et 8, **caractérisée en ce que** l'élément de fermeture (4) comprend une tête de fermeture (4a), **en ce que** la tête de fermeture (4a) présente un appui (4f) au niveau du côté opposé au siège de soupape (7a) et **en ce que** la première extrémité de ressort (5a) repose sur l'appui (4f).

10. Soupape champignon selon la revendication 9, **caractérisée en ce que** l'élément de fermeture (4) et le ressort (5) sont réalisés de manière adaptée mutuellement de telle sorte que le ressort (5) vienne en contact avec l'élément de fermeture (4) uniquement au niveau de l'appui (4f).

11. Soupape champignon selon l'une quelconque des revendications 4 à 10, **caractérisée en ce que** la partie de guidage (6) est réalisée sous forme cylindrique, **en ce que** l'élément de fermeture (4) présente un alésage (4c), et **en ce que** la partie de guidage (6) et l'alésage (4c) sont réalisés de manière adaptée mutuellement de telle sorte qu'ils constituent un palier linéaire, notamment un palier lisse.

12. Soupape champignon selon la revendication 11, **caractérisée en ce que** l'élément de fermeture (4) se compose d'une tête de fermeture (4a) suivie dans la direction d'étendue de l'axe (A) d'une portion de guidage (4b), l'élément de fermeture (4) étant réalisé de manière concentrique et présentant en son centre l'alésage (4c).

13. Soupape champignon selon l'une quelconque des revendications 4 à 10, **caractérisée en ce que** la partie de guidage (6) est réalisée sous forme cylindrique creuse, **en ce que** l'élément de fermeture (4) comprend une portion de guidage cylindrique (4b) et **en ce que** la partie de guidage (6) et la portion de guidage (4b) sont réalisées de manière adaptée mutuellement de telle sorte qu'elles constituent un palier linéaire, en particulier un palier lisse.

14. Soupape champignon selon l'une quelconque des revendications 4 à 13, **caractérisée en ce que** le siège de soupape (7a) est réalisé sous la forme d'une bague de siège de soupape séparée qui est disposée dans le couvercle de siège de soupape (2) .

15. Soupape champignon selon l'une quelconque des revendications précédentes, **caractérisée en ce que** la partie de guidage (6) présente, vers l'ouverture d'entrée (2a), une partie d'extrémité de forme sphérique (6d).

16. Soupape champignon selon l'une quelconque des revendications précédentes, **caractérisée en ce que** le logement (3) présente une structure de retenue (3e) au niveau de laquelle sont disposées les parties de guidage (6), la structure de retenue présentant des espaces intermédiaires (3c).

17. Soupape champignon selon la revendication 16, **caractérisée en ce que** la structure de retenue (3e) est réalisée sous la forme d'une structure en treillis comprenant une pluralité de membrures (3b) et de noeuds (3a) ainsi que d'espaces intermédiaires (3c), les parties de guidage (6) étant disposées dans les noeuds (3a).

18. Soupape champignon selon l'une quelconque des revendications 16 à 17, **caractérisée en ce que** le logement (3) présente une paroi extérieure (3d) de forme cylindrique creuse qui s'étend dans la direction axiale (A) et qui entoure la structure de retenue (3e) dans la direction périphérique.

19. Compresseur à piston comprenant une soupape champignon (1) selon l'une quelconque des revendications précédentes.
